# FASCICULE DE BREVET EUROPEEN

(11) **EP 1 621 280 B1**
(45) Date de publication et mention de la délivrance du brevet: **15.09.2010**
(21) Numéro de dépôt: 05291604.6
(22) Date de dépôt: 27.07.2005
(51) Int. Cl.: B23K 26/06

(54) **Procédé de soudage par laser d'au moins deux pièces mètalliques et dispositifs associés pour la mise en oeuvre du procédé**
Verfahren zum Laserschweißen wenigstens zweier metallischen Werkstücke und zugehörige Vorrichtungen zur Durchführung des Verfahrens
Process for laser welding of at least two metallic workpieces and corresponding device for implementing process

(30) Priorité: 27.07.2004 FR 0451677
(43) Date de publication de la demande: 01.02.2006
(73) Titulaire: SNECMA, 75015 Paris (FR)
(72) Inventeur: Debeze, Bruno, 94300 Vincennes (FR); Launais, Hervé, 91800 Brunoy (FR); Jobez, Sophie, 91360 Epinay sur Orge (FR)
(74) Mandataire: Bloch, Gérard

(56) Documents cités:
- WO-A-01/26859
- WO-A-03/031108
- DE-A1- 2 713 904
- DE-C1- 19 527 070
- US-A- 4 958 900

## Description

L'invention concerne un procédé de soudage par laser d'au moins deux pièces métalliques, ainsi que des dispositifs associés pour la mise en oeuvre du procédé.

De nombreuses applications dans l'industrie nécessitent de souder bord à bord deux pièces métalliques. De nombreuses techniques de soudage existent, par exemple le soudage à l'arc, le soudage plasma à l'arc, le soudage par faisceau d'électrons, le soudage par faisceau laser, ...

Dans le domaine aéronautique, notamment, où les contraintes sur le résultat du soudage sont nombreuses, on utilise en général des procédés de soudage par faisceau laser, qui offrent de bonnes garanties sur la qualité du cordon de soudure, ou par faisceau d'électrons, si les épaisseurs sont importantes.

Il existe deux principaux types de lasers : les lasers dits continus et les lasers dits pulsés, selon que la puissance du faisceau laser est émise de façon continue ou émise par impulsions successives, respectivement. D'une façon générale, les lasers continus sont utilisés pour des applications de soudage tandis que les lasers pulsés sont utilisés pour des applications d'usinage ou de perçage.

Le document WO 03/031108 présente un procédé de soudage, dans lequel un laser continu et un laser pulsé sont appliqués sur la zone de soudure. Les lasers sont agencés pour que le second laser (pulsé) soit focalisé sur la portion aval de la zone de soudure.

En raison de critères aéronautiques, pour des pièces à souder d'une épaisseur supérieure à 5 mm environ, on utilise actuellement des procédés de soudage par faisceau d'électrons, car les puissances disponibles avec les lasers ne sont pas suffisantes. Même si on parvenait à utiliser un laser continu de forte puissance, son action détériorerait la pièce et rendrait le soudage inacceptable, tandis qu'un laser pulsé percerait les pièces au lieu de les souder. L'utilisation d'un procédé de soudage par faisceau d'électrons est donc actuellement obligatoire.

Cependant, dans ce cas, si les pièces à souder sont de forme complexe, les dispositifs de soudage par faisceau d'électrons ne disposent pas d'une mobilité suffisante pour suivre convenablement la ligne de soudure, tandis que les dispositifs de soudage par faisceau laser, qui possèdent une meilleure mobilité, ne sont pas assez puissants pour assurer un soudage convenable, comme il a été vu.

La présente invention vise à résoudre ce problème.

A cet effet, l'invention concerne un procédé de soudage par laser d'au moins deux pièces métalliques, dans lequel les pièces sont soudées le long d'une zone de soudure, caractérisé par le fait qu'un faisceau laser continu et un faisceau laser pulsé sont simultanément appliqués aux mêmes points sur la zone de soudure, le faisceau laser continu étant agencé pour former un bain de soudage liquide stable et le faisceau laser pulsé étant agencé pour faire pénétrer le bain dans le matériau.

Par le procédé de l'invention, on additionne l'action du laser pulsé à celle du laser continu ; le laser continu permet d'établir un bain de fusion stable dans la zone de soudure, le laser pulsé facilitant, grâce à son énergie de crête importante, la pénétration de l'énergie et donc du bain de fusion, ce qui autorise un soudage plus profond.

Le procédé de l'invention présente de multiples avantages : il permet de souder, en mode débouchant, des pièces dont l'épaisseur est supérieure à 5 mm tout en se conformant aux critères aéronautiques, d'augmenter la vitesse de soudage, de diminuer la largeur du cordon de soudure et ainsi de limiter les déformations des pièces, de réduire les porosités liées au soudage et aussi de souder des pièces le long de lignes de soudure de forme complexe, du fait de la mobilité des dispositifs de soudage par laser.

L'invention concerne aussi un dispositif selon la revendication 8

L'invention sera mieux comprise grâce à la description suivante de la forme de réalisation préférée du procédé de l'invention et des dispositifs de mise en oeuvre du procédé, en référence aux dessins annexés, sur lesquels :
- la figure 1 représente une vue schématique en coupe d'un cordon de soudure réalisé en partie grâce au procédé de l'invention ;
- la figure 2 représente une vue schématique de profil d'un premier dispositif de mise en oeuvre du procédé de l'invention ;
- la figure 3 représente une vue schématique de profil d'un deuxième dispositif de mise en oeuvre du procédé de l'invention, et
- la figure 4 représente une vue schématique de profil d'un troisième dispositif de mise en oeuvre du procédé de l'invention.

D'une façon générale, un laser comprend un résonateur et une source d'énergie. Le résonateur comprend un milieu laser, contenant des atomes, molécules ou ions susceptibles de libérer des photons par émission stimulée, aux extrémités duquel sont disposés deux miroirs opposés. La source d'énergie excite les éléments du milieu laser, qui émettent, par émission stimulée, des photons effectuant des allers-retours entre les deux miroirs. L'un des miroirs est semi-transparent, permettant au faisceau laser d'être émis. Des amplificateurs sont éventuellement disposés en aval du miroir semi-transparent du résonateur. Le faisceau laser est émis en sortie par une fibre optique.

La source d'énergie peut fournir au milieu laser une énergie continue ; il en résulte l'émission d'un faisceau laser continu. La source d'énergie peut sinon fournir au milieu laser des décharges d'énergie ; il en résulte l'émission d'un faisceau laser pulsé, c'est-à-dire un faisceau dont l'énergie est répartie par impulsions. Dans ce cas, le faisceau présente des crêtes d'énergie maximale, et fournit dans le temps une énergie moyenne.

Les lasers utilisés dans le cadre du procédé de l'invention sont des lasers dits YAG. Dans ces derniers, le milieu laser est constitué d'un Grenat d'Aluminium et Yttrium (YAG), dopé au Néodyme (Nd). Les particules excitables sont les ions néodyme Nd³⁺. Les lasers utilisés émettent un faisceau de longueur d'onde de 1064 nm. Les fibres permettant cette émission autorisent une mobilité du dispositif supérieure à celle d'un dispositif de soudage par faisceau d'électrons, par exemple, et donc le soudage de pièces de formes complexes.

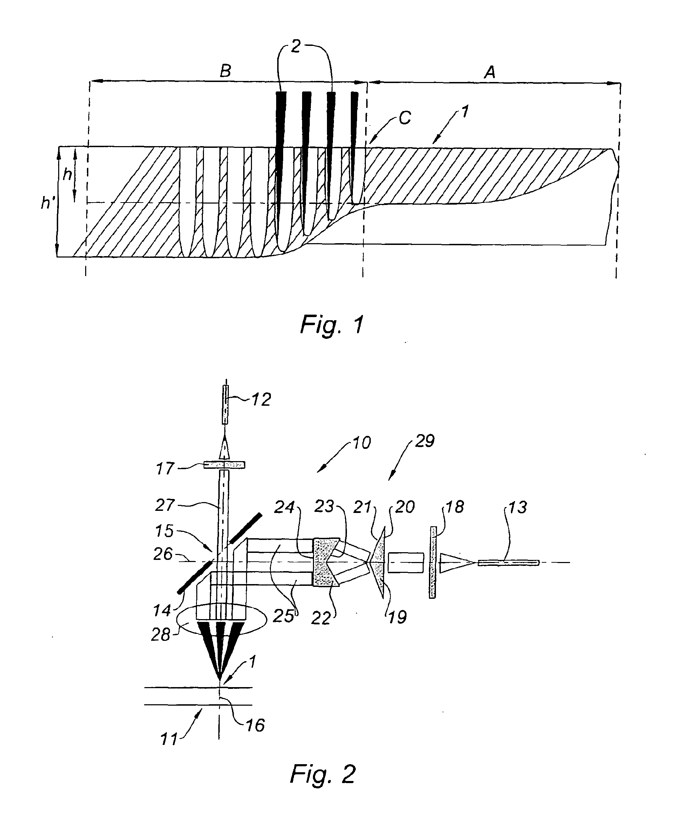

En référence à la figure 1, le procédé de l'invention est employé pour souder bord à bord deux pièces métalliques à l'aide de deux faisceaux lasers appliqués simultanément sur la zone de soudure. On voit sur la figure 1 la mise en oeuvre d'un tel procédé, de façon schématique. Le plan de coupe de la figure 1 se situe à la jonction entre deux pièces métalliques à souder, le long de la zone de soudure 1.

Sur une zone A pour laquelle l'épaisseur h à souder est ici égale à 5 mm, l'application d'un faisceau laser YAG continu est suffisante pour permettre le soudage. Le faisceau est donc déplacé, ici de la droite vers la gauche, à une vitesse et avec une puissance déterminées par l'homme du métier, de façon classique, afin de mettre la matière en fusion et de permettre son soudage.

A partir d'un point C, on désire, sur une zone B, effectuer un soudage sur une épaisseur h' supérieure à l'épaisseur h. L'application d'un faisceau laser YAG continu ne permet pas ce soudage. On ajoute alors, à partir du point C, et sur l'ensemble de la zone B, un faisceau laser YAG pulsé, schématisé par des pics 2, au faisceau laser YAG continu. Ces deux faisceaux sont appliqués simultanément aux mêmes points, avec éventuellement des réglages de leur distance focale différents. Les deux faisceaux sont de même longueur d'onde 1064 nm. La puissance appliquée par le faisceau laser YAG continu sur l'ensemble de la zone B est la même que sur la zone A.

Le faisceau laser continu permet l'obtention d'un bain de fusion liquide stable, tandis que les crêtes d'énergie du faisceau laser pulsé autorisent une pénétration plus profonde de l'énergie au sein du matériau, et donc du bain au sein du matériau, tout en conservant la stabilité du bain liquide. Elle permet en outre d'accroître la vitesse de soudage et de réduire la présence de porosités, liées à l'apparition de bulles de gaz emprisonnées après la solidification du bain de fusion.

Ainsi, le faisceau laser pulsé agit sur le bain liquide formé par le faisceau laser continu pour permettre la pénétration du bain dans le matériau. Le brassage au sein du bain est en outre rendu plus uniforme par l'ajout du faisceau laser pulsé. Enfin, la largeur du cordon de soudure, pour un soudage équivalent, est inférieure dans le cas de l'utilisation d'un faisceau laser pulsé, ce qui diminue les déformations des pièces à souder.

Il est possible, grâce à ce procédé, d'effectuer un soudage sur une épaisseur supérieure à 5 mm en mode débouchant, c'est-à-dire un mode dans lequel le soudage est effectué sur toute l'épaisseur des pièces à souder, entre une face et sa face opposée.

Le procédé de soudage de deux pièces à l'aide d'un faisceau laser continu et d'un faisceau laser pulsé appliqués simultanément peut être mis en oeuvre à l'aide de divers dispositifs, dont certains vont être décrits, à titre d'illustration.

Dans les figures 2, 3 et 4, il sera considéré que les pièces 11 à souder présente une surface plane horizontale. Les notions de verticalité et d'horizontalité seront donc comprises par rapport à cette orientation de la surface à souder, et il va de soi que les orientations des dispositifs seront adaptées en conséquence en cas de non horizontalité des surfaces à souder.

La figure 2 représente un premier dispositif 10 de mise en oeuvre du procédé de soudage. Ce dispositif 10 comprend deux sources lasers, non représentées.

La première source laser comporte en sortie une fibre 12 émettant un faisceau laser YAG pulsé ; cette fibre 12 est placée à la verticale de la zone de soudure 1 des pièces 11 à souder, orientée globalement perpendiculairement à la surface des pièces 11. La seconde source laser comporte en sortie une fibre 13 émettant un faisceau laser YAG continu ; cette fibre 13 est orientée perpendiculairement à la fibre 12 du laser pulsé.

Un miroir 14, percé d'un trou circulaire 15, est placé entre la fibre 12 du laser pulsé et les pièces 11 à souder. Il est orienté à 45° par rapport à l'axe 16 de cette fibre 12. Le faisceau laser pulsé issu de la fibre 12, après avoir traversé une lentille de collimation 17, se propage sous la forme d'un faisceau laser pulsé cylindrique 27 et traverse le miroir 14 en passant par son trou 15. Le miroir 14 n'influe donc pas sur la propagation du faisceau laser pulsé cylindrique 27.

Le faisceau laser continu issu de la fibre 13 traverse une lentille de collimation 18 puis traverse un premier prisme 19, dont la surface amont 20 est plane et la surface aval 21 est conique convexe, puis un second prisme 22, dont la surface amont 23 est conique concave et la surface aval 24 est plane. En sortie du second prisme 22, on obtient un faisceau laser continu annulaire 25. Le premier prisme 19 et le second prisme 22 constituent un dispositif 29 de formation d'un faisceau laser continu annulaire 25.

Le faisceau laser continu annulaire 25 se propage alors en direction du miroir de renvoi 14, dont la surface est orientée à 45° par rapport à l'axe 26 du faisceau annulaire 25, du fait de la perpendicularité entre les fibres 12, 13 d'émission des faisceaux lasers pulsé et continu. Le trou 15 du miroir 14 est agencé de façon à ce que le faisceau annulaire 25 impacte le miroir 14 autour du trou 15, sans y pénétrer, et soit donc réfléchi perpendiculairement à son axe 26 d'incidence, dans l'axe 16 du faisceau laser pulsé cylindrique 27.

Ainsi, en aval du miroir 14 et en direction des pièces 11 à souder, le faisceau laser pulsé cylindrique 27 se propage à l'intérieur du faisceau laser continu annulaire 25, concentriquement à ce dernier. Ces deux faisceaux 25, 27 traversent alors une lentille de focalisation 28, et sont focalisés pour impacter les pièces 11 au même endroit sur la zone de soudure 1, pouvant être focalisés ou non à des profondeurs différentes, selon ce qui est désiré. Ils mettent ainsi en oeuvre le procédé de soudage de pièces 11 à l'aide d'un faisceau laser continu 25 et d'un faisceau laser pulsé 27 appliqués simultanément.

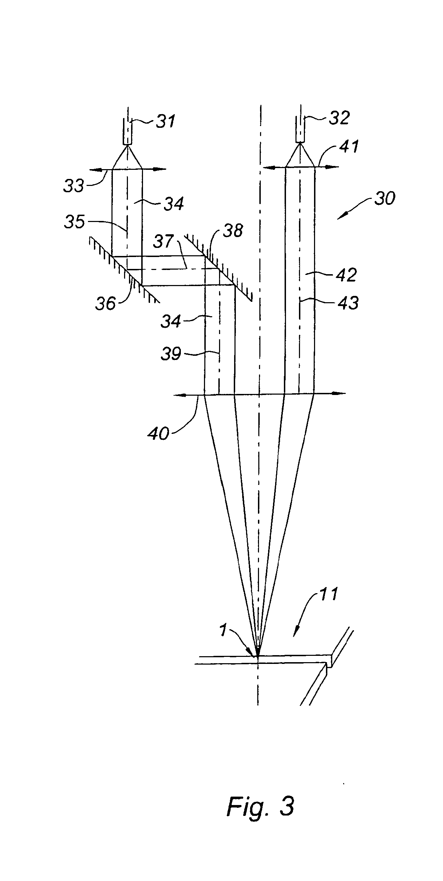

La figure 3 représente un deuxième dispositif 30 de mise en oeuvre du procédé de soudage. Ce dispositif 30 comprend deux sources lasers, non représentées.

La première source laser comporte en sortie une fibre 31 émettant un faisceau laser YAG pulsé ; cette fibre 31 est placée à la verticale, mais décalée, de la zone de soudure 1 des pièces 11 à souder, orientée globalement perpendiculairement à la surface des pièces 11 dans la zone de soudure 1. La seconde source laser comporte en sortie une fibre 32 émettant un faisceau laser YAG continu ; cette fibre 32 est orientée parallèlement à la fibre 31 du laser pulsé. Les deux fibres 31, 32 sont situés à la même altitude par rapport à la surface de la zone de soudure 1.

Le faisceau laser pulsé issu de la fibre 31 traverse une lentille de collimation 33, d'où il émerge en un faisceau laser pulsé "cylindrique" 34 suivant un axe 35, ici vertical. Ce faisceau laser pulsé cylindrique 34 se propage alors en direction d'un premier miroir de renvoi 36, orienté à 45° par rapport à son axe 35, et est donc réfléchi pour se propager suivant un deuxième axe 37 perpendiculaire à son axe d'origine 35, en direction d'un second miroir de renvoi 38, orienté à 45° par rapport au second axe 37. Le faisceau laser pulsé cylindrique 34 est réfléchi par le second miroir 38 suivant un axe 39 parallèle à son axe d'origine 35, mais décalé, par rapport à ce dernier, de la distance horizontale entre les deux miroirs 36, 38.

Le faisceau laser pulsé cylindrique 34 réfléchi par le second miroir 38 se propage alors vers une lentille de focalisation 40.

Le faisceau laser continu issu de la fibre 32 traverse une lentille de collimation 41, d'où il émerge en un faisceau laser continu "cylindrique" 42 suivant un axe 43, ici vertical et parallèle à l'axe 39 de propagation du faisceau laser pulsé réfléchi par le second miroir 38. Ce faisceau laser continu cylindrique 42 se propage alors en direction de la lentille de focalisation 40, parallèlement au faisceau laser pulsé cylindrique 34 réfléchi par le second miroir 38, ce dernier étant placé de manière suffisamment décalée par rapport à l'axe 43 de propagation du faisceau laser continu cylindrique 42 pour ne pas interférer sur sa propagation.

La lentille de focalisation 40 est disposée perpendiculairement aux axes 39, 43 de propagation des faisceaux lasers cylindriques pulsé 34 et continu 42, c'est-à-dire ici horizontalement. Ces deux faisceaux 34, 42 traversent la lentille 40 en des zones différentes, et le dispositif est agencé pour que leur focalisation se fasse au même endroit sur les pièces à souder 11 dans la zone de soudure 1, à la même profondeur ou non, selon ce qui est désiré, permettant ainsi la mise en oeuvre du procédé de soudage des pièces 11 à l'aide d'un faisceau laser continu 42 et d'un faisceau laser pulsé 34 appliqués simultanément.

Le premier miroir 36 est réglable verticalement, tandis que la lentille de collimation 41 du faisceau laser continu est réglable horizontalement, afin de pouvoir faire varier l'angle entre les faisceaux 34, 42 à leur sortie de la lentille de focalisation.

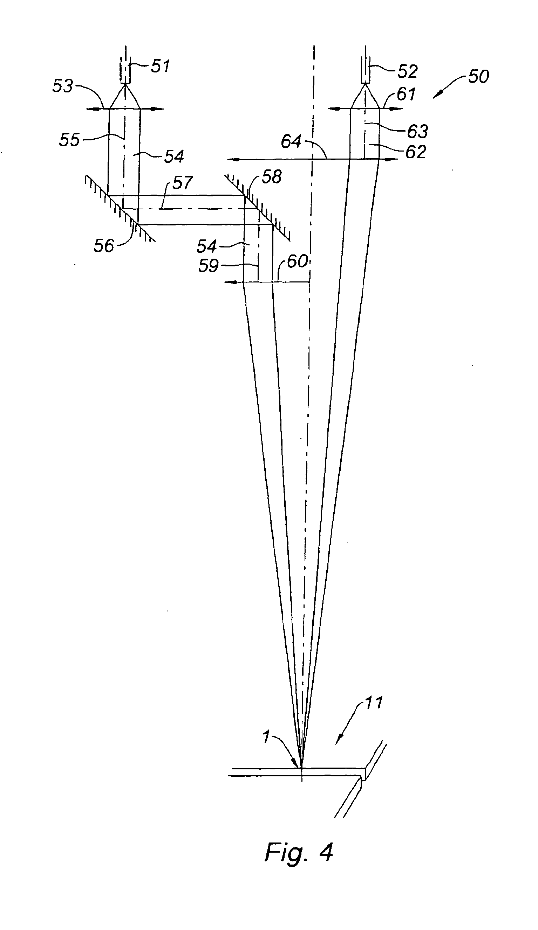

La figure 4 représente un troisième dispositif 50 de mise en oeuvre du procédé de soudage. Ce dispositif 50 comprend deux sources lasers, non représentées.

La première source laser comporte en sortie une fibre 51 émettant un faisceau laser YAG pulsé ; cette fibre 51 est placée à la verticale, mais décalée, de la zone de soudure 1 des pièces 11 à souder, orientée globalement perpendiculairement à la surface des pièces 11 dans la zone de soudure 1. La seconde source laser comporte en sortie une fibre 52 émettant un faisceau laser YAG continu ; cette fibre 52 est orientée parallèlement à la fibre 51 du laser pulsé. Les deux fibres 51, 52 sont situés à la même altitude par rapport à la surface de la zone de soudure 1.

Le faisceau laser pulsé issu de la fibre 51 traverse une lentille de collimation 53, d'où il émerge en un faisceau laser pulsé "cylindrique" 54 suivant un axe 55, ici vertical. Ce faisceau laser pulsé cylindrique 54 se propage alors en direction d'un premier miroir de renvoi 56, orienté à 45° par rapport à son axe 55, et est donc réfléchi pour se propager suivant un deuxième axe 57 perpendiculaire à son axe d'origine 55, en direction d'un second miroir de renvoi 58, orienté à 45° par rapport au second axe 57. Le faisceau laser pulsé cylindrique 54 est réfléchi par le second miroir 58 suivant un axe 59 parallèle à son axe d'origine 55, mais décalé, par rapport à ce dernier, de la distance horizontale entre les deux miroirs 56, 58.

Le faisceau laser pulsé cylindrique 54 réfléchi du second miroir 58 se propage alors vers une demi lentille de focalisation 60, dont l'utilité sera explicitée plus loin.

Le faisceau laser continu issu de la fibre 52 traverse une lentille de collimation 61, d'où il émerge en un faisceau laser continu "cylindrique" 62 suivant un axe 63, ici vertical et parallèle à l'axe 59 de propagation du faisceau laser pulsé réfléchi par le second miroir 58. Le faisceau laser continu cylindrique 62 se propage alors en direction d'une lentille de focalisation 64.

La demi lentille de focalisation 60 et la lentille de focalisation 64 sont disposées perpendiculairement aux axes 59, 63 de propagation des faisceaux lasers cylindriques pulsé 54 et continu 62, c'est-à-dire ici horizontalement. Elles sont agencées de façon à ce que la focalisation des faisceaux 54, 62 se fasse au même endroit sur les pièces à souder 11 dans la zone de soudure 1, à la même profondeur ou non, selon ce qui est désiré, permettant ainsi la mise en oeuvre du procédé de soudage des pièces 11 à l'aide d'un faisceau laser continu 42 et d'un faisceau laser pulsé 34 appliqués simultanément.

La lentille de focalisation 64 du faisceau laser continu 62 est située en altitude, verticalement, au-dessus des miroirs 56, 58 et donc également de la demi lentille de focalisation 60.

La focalisation du faisceau laser pulsé 54 est effectuée à l'aide d'une demi lentille 60 afin de permettre de rapprocher au maximum le faisceau laser pulsé 54 du faisceau laser continu 62. On tend ainsi vers une superposition des faisceaux 54, 62, mais tout en conservant l'indépendance de leur propagation ; les deux faisceaux 54, 62 ne se rencontrent que dans la zone de soudure 1.

Le premier miroir 56 est réglable verticalement, tandis que la lentille de collimation 61 du faisceau laser continu est réglable horizontalement, afin de pouvoir faire varier l'angle entre les faisceaux lasers pulsé 54 et continu 62 à leur sortie de la demi lentille de focalisation 60 et de la lentille de focalisation 64, respectivement.

Les trois dispositifs qui viennent d'être décrits peuvent fonctionner avec ou sans le laser pulsé, selon le soudage désiré, et le réglage du milieu gazeux environnant, des diverses puissances, variations temporelles de puissance, focales, polarisations, ... des faisceaux lasers seront adaptés par l'homme du métier en fonction de l'application désirée.

A titre d'exemple, dans les dispositifs décrits, le laser pulsé 27, 34, 54 peut présenter une puissance moyenne de 1 kW et une puissance de crête de 30 kW et le laser continu 25, 42, 62 peut présenter une puissance de 4 kW.

A titre d'exemple encore, pour le troisième dispositif de la figure 4, la demi lentille de focalisation 60 possède une distance focale de 200 mm et la lentille de focalisation 64 possède une distance focale de 250 mm, ces deux lentilles 60, 64 étant distantes en altitude de 50 mm et la zone de soudure 1 étant située à 250 mm de la lentille de focalisation 64.

Le procédé de l'invention a été décrit en lien avec l'utilisation de lasers YAG, mais il va de soi que d'autres lasers, l'un en mode continu et l'autre en mode pulsé, pourraient être utilisés, s'ils permettent de délivrer des puissances suffisantes.

En outre, le procédé a été décrit pour le soudage bord à bord de deux pièces métalliques, mais il pourrait également être utilisé, sous certaines conditions, pour le soudage de plus de deux pièces.

## Revendications

1. Procédé de soudage par laser d'au moins deux pièces métalliques (11), dans lequel les pièces (11) sont soudées le long d'une zone de soudure (1), **caractérisé par le fait qu'**un faisceau laser continu (25, 42, 62) et un faisceau laser pulsé (27, 34, 54) sont simultanément appliqués aux mêmes points sur la zone de soudure (1), le faisceau laser continu (25, 42, 62) étant agencé pour former un bain de soudage liquide stable et le faisceau laser pulsé (27, 34, 54) étant agencé pour faire pénétrer le bain dans le matériau.

2. Procédé selon la revendication 1, **caractérisé par le fait que** le faisceau laser continu (25, 42, 62) et le faisceau laser pulsé (27, 34, 54) sont focalisé au même point sur la zone de soudure (1).

3. Procédé selon la revendication 1, dans lequel le faisceau laser continu (25, 42, 62) et le faisceau laser pulsé (27, 34, 54) sont focalisés à des profondeurs différentes dans les pièces (11) sur la zone de soudure (1).

4. Procédé selon l'une des revendications 1 à 3, dans lequel le faisceau laser continu (25, 42, 62) et le faisceau laser pulsé (27, 34, 54) sont des faisceaux laser YAG.

5. Procédé selon l'une des revendications 1 à 4, dans lequel le faisceau laser continu est un faisceau annulaire (25) au sein duquel se propage concentriquement un faisceau laser pulsé (27) cylindrique, lesdits faisceaux (25, 27) étant focalisés sur la zone de soudure (1) par une lentille de focalisation (28).

6. Procédé selon l'une des revendications 1 à 4, dans lequel le faisceau laser continu (42) et le faisceau laser pulsé (34) sont des faisceaux cylindriques focalisés par une même lentille de focalisation (40) sur 1a zone de soudure (1).

7. Procédé selon l'une des revendications 1 à 4, dans lequel le faisceau laser continu (62) est focalisé par une lentille de focalisation (64) et le faisceau laser pulsé (54) est focalisé par une demi lentille de focalisation (60) sur la zone de soudure (1).

8. Dispositif pour la mise en oeuvre du procédé de la revendication 1, comprenant une source laser émettant un faisceau laser continu (25, 42), une source laser émettant un faisceau laser pulsé (27, 34) carctérisé en ce qu'il comprend une lentille (28, 40) de focalisation du faisceau laser continu (25, 42) et du faisceau laser pulsé (27, 34) au même endroit sur la zone de soudure.

9. Dispositif selon la revendication 8, comprenant un dispositif (29) de formation d'un faisceau laser continu annulaire (25), un miroir (14) de renvoi du faisceau laser continu annulaire (25), percé d'un trou (15) de passage du faisceau laser pulsé (27), qui est cylindrique, et la lentille de focalisation (28) desdits faisceaux (25, 27) sur la zone de soudure (1).

10. Dispositif selon la revendication 8, comprenant une lentille de collimation (33) du faisceau laser pulsé (34), qui est cylindrique, une lentille de collimation (41) du faisceau laser continu (42), qui est cylindrique, un premier miroir (36) et un deuxième miroir (38) de renvoi du faisceau laser pulsé (34) et la lentille de focalisation (40) du faisceau laser continu (42) et du faisceau laser pulsé (34) sur la zone de soudure (1).

11. Dispositif selon la revendication 10, dans lequel le premier miroir de renvoi (36) du faisceau laser pulsé (34) et la lentille de collimation (41) du faisceau laser continu (42) sont réglables afin de pouvoir régler l'angle entre le faisceau laser pulsé (34) et le faisceau laser continu (42).

## Claims

1. A method for laser welding of at least two metal parts (11), wherein the parts (11) are welded along a weld area (1), **characterized by** the fact that a continuous laser beam (25, 42, 62) and a pulsed laser beam (27, 34, 54) are simultaneously applied to the same points on the weld area (1), the continuous laser beam (25, 42, 62) being arranged in order to form a stable liquid welding bath and the pulsed laser beam (27, 34, 54) being arranged to cause the bath to penetrate into the material.

2. The method according to claim 1, **characterized by** the fact that the continuous laser beam (25, 42, 62) and the pulsed laser beam (27, 34, 54) are focused on the same point on the weld area (1).

3. The method according to claim 1, wherein the continuous laser beam (25, 42, 62) and the pulsed laser beam (27, 34, 54) are focused at different depths in the parts (11) on the weld area (1).

4. The method according to any of claims 1 to 3, wherein the continuous laser beam (25, 42, 62) and the pulsed laser beam (27, 34, 54) are YAG laser beams.

5. The method according to any of claims 1 to 4, wherein the continuous laser beam is an annular beam (25) within which a cylindrical pulsed laser beam propagates concentrically, said beams (25, 27) being focused on the weld area (1) by a focusing lens (28).

6. The method according to any of claims 1 to 4, wherein the continuous laser beam (42) and the pulsed laser beam (34) are cylindrical beams focused by a same focusing lens (40) on the weld area (1).

7. The method according to any of claims 1 to 4, wherein the continuous laser beam (62) is focused by a focusing lens (64) and the pulsed laser beam (54) is focused by a focusing half-lens (60) on the weld area (1).

8. A device for applying the method of claim 1, comprising a laser source emitting a continuous laser beam (25, 42), a laser source emitting a pulsed laser beam (27, 34), **characterised in that** it comprises a lense (28, 40) for focusing said continuous laser beam (25, 42) and said pulsed laser beam (27, 34) at the same place on the weld area.

9. A device according to claim 8, comprising a device (29) for forming an annular continuous laser beam (25), a mirror (14) for sending back the annular continuous laser beam (25), pierced with a hole (15) for letting through the pulsed laser beam (27), which is cylindrical, and the lens (28) for focusing said beams (25, 27) on the weld area (1).

10. A device according to claim 8, comprising a lens (33) for collimating the pulsed laser beam (34), which is cylindrical, a lens (41) for collimating the continuous laser beam (42), which is cylindrical, a first mirror (36) and a second mirror (38) for sending back the pulsed laser beam (34) and the lens for focusing (40) the continuous laser beam (42) and the pulsed laser beam (34) onto the weld area (1).

11. The device according to claim 10, wherein the first mirror for sending back (36) the pulsed laser beam (34) and the lens for collimating (41) the continuous laser beam (42) are adjustable so as to be able to set the angle between the pulsed laser beam (34) and the continuous laser beam (42).

## Patentansprüche

1. Verfahren zum Laserschweißen von mindestens zwei Metallteilen (11), wobei die Teile (11) entlang eines Schweißbereichs (1) geschweißt werden, **dadurch gekennzeichnet, dass** ein kontinuierlicher Laserstrahl (25, 42, 62) und ein gepulster Laserstrahl (27, 34, 54) gleichzeitig auf die gleichen Punkte auf dem Schweißbereich (1) gerichtet werden, wobei der kontinuierliche Laserstrahl (25, 42, 62) angeordnet ist, um ein stabiles flüssiges Schweißbad zu bilden und der gepulste Laserstrahl (27, 34, 54) angeordnet ist, um das Bad in das Metall eindringen zu lassen.

2. Verfahren nach Anspruch 1, **dadurch gekennzeichnet, dass** der kontinuierliche Laserstrahl (25, 42, 62) und der gepulste Laserstrahl (27, 34, 54) auf den gleichen Punkt auf dem Schweißbereich (1) fokussiert sind.

3. Verfahren nach Anspruch 1, wobei der kontinuierliche Laserstrahl (25, 42, 62) und der gepulste Laserstrahl (27, 34, 54) auf verschiedne Tiefen in den Teilen (11) auf dem Schweißbereich (1) fokussiert sind.

4. Verfahren nach einem der Ansprüche 1 bis 3, wobei der kontinuierliche Laserstrahl (25, 42, 62) und der gepulste Laserstrahl (27, 34, 54) YAG-Laserstrahlen sind.

5. Verfahren nach einem der Ansprüche 1 bis 4, wobei der kontinuierliche Laserstrahl ein ringförmiger Strahl (25) ist, in dessen Mitte sich ein zylindrischer gepulster Laserstrahl (27) konzentrisch ausbreitet, wobei die Strahlen (25, 27) durch eine Linse zur Fokussierung (28) auf den Schweißbereich (1) fokussiert sind.

6. Verfahren nach einem der Ansprüche 1 bis 4, wobei der kontinuierliche Laserstrahl (42) und der gepulste Laserstrahl (34) zylindrische Strahlen sind, die durch eine gleiche Linse zur Fokussierung (40) auf den Schweißbereich (1) fokussiert sind.

7. Verfahren nach einem der Ansprüche 1 bis 4, wobei der kontinuierliche Laserstrahl (62) durch eine Linse zur Fokussierung (64) und der gepulste Laserstrahl (54) durch eine halbe Linse zur Fokussierung (60) auf den Schweißbereich (1) fokussiert ist.

8. Vorrichtung zur Durchführung des Verfahrens nach Anspruch 1, umfassend eine Laserquelle zum strahlen eines kontinuierlichen Laserstrahls (25,42), eine Laserquelle zum strahlen eines gepulsten Laserstrahls (27,34), **dadurch gekennzeichnet dass** die Vorrichtung eine Linse (28,40) zur Fokussierung des kontinuierlichen Laserstrahl (25,42) und des gepulsten Laserstrahls (27,34) auf der gleichen Stelle auf dem Schweißbereich (1) umfasst.

9. Vorrichtung nach Anspruch 8, umfassend eine Vorrichtung (29) zur Bildung eines ringförmigen kontinuierlichen Laserstrahls (25), einen Spiegel (14) zum Reflektieren des ringförmigen kontinuierlichen Laserstrahls (25), durchbohrt von einem Loch (15) zum Durchgang des gepulsten Laserstrahls (27), der zylindrisch ist, und die Linse zur Fokussierung (28) der Strahlen (25, 27) auf den Schweißbereich (1).

10. Vorrichtung nach Anspruch 8, umfassend eine Kollimationslinse (33) des gepulsten Laserstrahls (34), der zylindrisch ist eine Kollimationslinse (41) des kontinuierlichen Laserstrahls (42), der zylindrisch ist, einen ersten Spiegel (36) und einen zweiten Spiegel (38) zum Reflektieren des gepulsten Laserstrahls (34) und die Linse zur Fokussierung (40) des kontinuierlichen Laserstrahls (42) und des gepulsten Laserstrahls (34) auf den Schweißbereich (1).

11. Vorrichtung nach Anspruch 10, wobei der erste Spiegel zum Reflektieren (36) des gepulsten Laserstrahls (34) und die Kollimationslinse (41) des kontinuierlichen Laserstrahls (42) einstellbar sind, um den Winkel zwischen dem gepulsten Laserstrahl (34) und dem kontinuierlichen Laserstrahl (42) einstellen zu können.
